# EUROPEAN PATENT SPECIFICATION

(11) **EP 0 575 202 B1**
(45) Date of publication and mention of the grant of the patent: **16.09.1998**
(21) Application number: 93304810.0
(22) Date of filing: 18.06.1993
(51) Int. Cl.: H04N 7/24, H04N 7/26

(54) **Encoding and decoding digital video data**
Kodierung und Dekodierung von digitalen Videodaten
Codage et décodage de données vidéo numériques

(30) Priority: 18.06.1992 KR 1061792
(43) Date of publication of application: 22.12.1993
(73) Proprietor: SAMSUNG ELECTRONICS CO., LTD., Suwon-city, Kyungki-do 441-373 (KR)
(72) Inventor: Jeong, Jechang, Seocho-gu, Seoul (KR)
(74) Representative: Stanley, David William

(56) References cited:
- US-A- 5 107 348
- IEEE TRANSACTIONS ON CIRCUITS AND SYSTEMS, vol.36, no.10, October 1989, NEW YORK US pages 1275 - 1280 R.L.SCHMIDT 'A memory control chip for formatting data into blocks suitable for video coding applications'
- CCITT RECOMMENDATION H261, no.584, April 1990 pages 120 - 128 SPECIALIST GROUP ON CODING FOR VISUAL TELEPHONY 'Codec for Audiovisual Services at n x 384 kbit/s'

## Description

The present invention relates to encoding and decoding digital video data.

Recently, a method for encoding a video and audio signal into a digital signal so as to be transmitted or stored in a storage unit, and decoding the encoded digital signal so as to be reproduced, has been used in a system for transmitting and receiving video and audio signals. Methods for encoding such a transmitted or stored signal include a conversion coding method, a differential pulse code modulation method (DPCM), a vector quantization method, a variable length coding method, etc. The coding methods remove redundancy data which is included in the transmitted or stored signal, so effect compression of the total amount of data.

To explain the background of the present invention, encoding and decoding procedures with respect to a video signal will be described below. Generally, to encode the video signal, each picture is partitioned into blocks each of which has a predetermined dimension, and a predetermined transformation is performed with respect to the respective block data or error data between predetermined blocks, so that video data is converted - into a transformation coefficient of frequency domain. Such data transformation methods include discrete cosine transform (DCT), Walsh-Hadamard transform (WHT), discrete Fourier transform (DFT) and discrete sine transform (DST), etc. The transmission data is compressed by changing transformation coefficients which are converted by the above transformation method into representative values each of which is of a certain level, and encoding the representative values, considering their statistical characteristics.

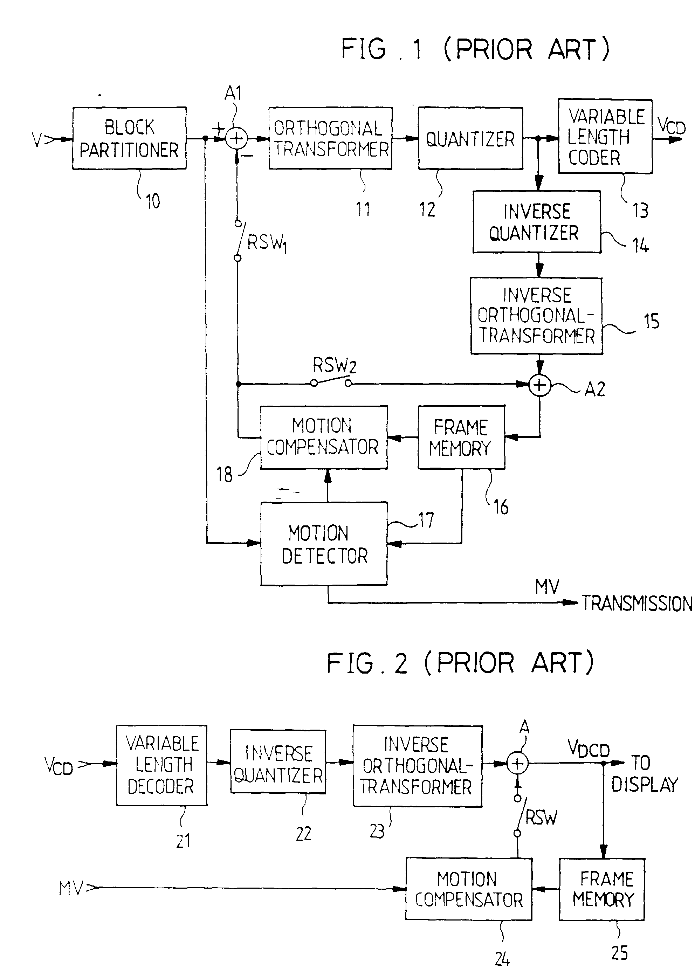

Reference will now be made to Figures 1 and 2 of the accompanying diagrammatic drawings. which are respective schematic block diagrams of conventional encoding and decoding apparatuses of a video signal.

The encoding apparatus of Figure 1 comprises means for partitioning video data into blocks each of which has a predetermined dimension, means for DCT-transforming each block data to quantize transform coefficients, means for variable-length encoding the quantized data to compress the variable-length encoded data, means for inverse-quantizing and inverse-transforming the quantized data so as to be restored into data close to the block data. means for reconstructing a frame from the restored data, and means for performing motion detection and motion compensation from the reconstructed frame and the current block to be encoded. In Figure 1, block partitioner 10 partitions the input data into blocks of NxN (which is generally represented as N1xN2. and which for the convenience of explanation, is assumed as N1=N2=N in which "N" represents a pixel unit) magnitude. Then, the block data output from block partitioner 10 is added to predetermined feedback data in a first adder A1, thereby calculating error data between two data. The error data is DCT-transformed into transformation coefficients of a frequency domain in orthogonal transformer 11. Here, the energy of the transformation coefficients is chiefly collected toward a low frequency domain. Then quantizer 12 changes the conversion coefficients into representative values each of which has a predetermined level, taking the energy distribution of the conversion coefficients into consideration. Then, variable-length encoder 13 further compresses transmission data VCD by variable-length-encoding the representative values considering the statistical characteristics of the representative values.

There is, in general, much similarity between adjacent pictures. Accordingly, in the case of slightly moving pictures, the motion of the pictures is detected to calculate a motion vector MV. If the block data is compensated using the motion vector, a difference signal between adjacent pictures becomes very small. Accordingly, the transmission data can be further compressed. To perform such motion compensation, inverse-quantizer 14 and inverse orthogonal-transformer 15 inversely quantize the quantization coefficients output from quantizer 12, and then inversely convert the inverse-quantized coefficients into video data of spatial domain. The inverse-transformed video data comprises reproduction error data corresponding to error data output from first adder A1. The error data output from inverse orthogonal-transformer 15 is added to predetermined feedback data in a second adder A2 so as to be stored in a frame memory 16, thereby reconstructing a picture. Then, a motion detector 17 detects the block data which is closest to NxN block data output from block partitioner 10 among the frame data stored in frame memory 16. and then calculates a motion vector MV which represents movements between two blocks. The motion vector MV is transmitted toward a receiver for use in a decoding system shown in Figure 2. Also. motion vector MV is transmitted toward motion compensator 18 which is connected to frame memory 16 and motion detector 17. According to the motion vector supplied from motion detector 17, motion compensator 18 reads out an NxN block corresponding to the motion vector from the frame data stored in frame memory 16 and supplies the read NxN block to first adder A1. Then, as described above, the first adder calculates the error data between the NxN block data supplied from block partitioner 10 and the NxN block data having the similar pattern supplied from motion compensator 18. The error data is encoded again as described above so as to be supplied toward the receiver. In Figure 1. switches RSW1 and RSW2 are refresh switches for refreshing the data in units of a frame or block to prevent accumulation of the error data. That is, in the Figure 1 apparatus, when the two refresh switches RSW1 and RSW2 are turned on, the DPCM process is performed, while when they are turned off, pulse-code-modulation (PCM) data is generated in adders A1 and A2.

Such encoded video data VCD is supplied toward the receiver, and is input to the decoding apparatus shown in Figure 2. Then, the encoded video data VCD is decoded in variable-length decoder 21 through inverse steps of the variable-length encoding processes. The data output from variable-length decoder 21 is inverse-quantized into transformation coefficients of a frequency domain in inverse-quantizer 22. An inverse orthogonal-transformer 23 converts the transformation coefficients of the frequency domain supplied from inverse-quantizer 22 into video data of a spatial domain. Here, the inverse-transformed video data is reproduction error data corresponding to the error data calculated in first adder A1 of the encoding apparatus. Also, motion vector MV which is calculated in motion detector 17 for transmission is supplied to motion compensator 24 of the decoding apparatus. Motion compensator 24 reads out NxN block data corresponding to motion vector MV from the frame-data stored in frame memory 25, and supplies the read NxN block data to adder A. Then, adder A adds the inverse-converted error data. to the NxN block data supplied from motion compensator 24, and supplies the added data to a display unit.

Generally, the encoding and decoding apparatus partitions the picture data into blocks each of which has a predetermined dimension to compressing the transmitted video data, and encodes and decodes the partitioned blocks. However, in such a conventional encoding and decoding system, since video data forming a picture is processed in units of a block having a predetermined dimension, the boundaries between mutual blocks are easily conspicuous, and a phenomenon takes place that a certain portion of the picture appears to be a lattice. This phenomenon is called "blocking artifact." There have been recently proposed several methods of reducing such a blocking artifact. For example, the first method is that the partitioned blocks in the picture are overlapped with each other, the second method utilizes a lapped orthogonal transform, and the other method utilizes a low-pass filter with respect to the boundaries of the blocks in the decoding system. However, since the first and second methods change the general structural constitution of the encoding and decoding system as shown in Figures 1 and 2, they have problems that the complexity of the hardware increases. The third method has a problem which lowers resolution of the boundary portion of the block.

US-A-5107348 describes a method for reducing block artifacts in a reproduced image by partitioning each frame into blocks and spatially decorrelating corresponding blocks in a fixed temporal sequence. The blocks of even frames are spatially decorrelated relative to the corresponding blocks of the immediately preceding and immediately following odd frames.

Preferred embodiments of the present invention aim to provide an encoding system which adopts a variable picture partitioning technique for preventing blocking artifact from taking place during reproduction, in which when a picture is partitioned into blocks each of which has a predetermined dimension and the partitioned blocks are encoded, the positions of the blocks into which the picture is partitioned are slightly varied for every frame to encode the blocks.

It is another aim to provide a decoding system which adopts a variable picture partitioning technique for decoding data which is encoded by an encoding system which adopts a variable picture partitioning technique in order to prevent blocking artifact, when decoding picture data which is encoded after being partitioned into a plurality of blocks.

According to one aspect of the present invention, there is provided an encoding method which partitions video data into blocks of a predetermined dimension, encodes the partitioned blocks, and performs a differential pulse code modulation (DPCM) in units of a block, considering correlation between a current frame and a preceding frame, characterised in that said method adopts a variable picture partitioning technique which maintains correlation between current frames and respective preceding frames of input video data, said variable picture partitioning technique comprising the steps of:
generating a predetermined picture partitioning address for each said current frame, based on offset data which increases linearly and repetitively from frame to frame by a predetermined pixel dimension at a predetermined interval rate;
generating a predetermined picture partitioning sync signal in order to match variable picture partitioning between encoding and decoding apparatuses;
partitioning each said current frame of the input video data into a plurality of blocks according to said picture partitioning address; and
storing block data restored for motion compensation according to the picture partitioning address to reconstruct a predetermined frame.

Preferably, said picture partitioning sync signal is generated each time said offset data is reset by new data.

Preferably, said picture partitioning address generating step comprises the steps of for each said current frame;
generating a horizontal block address which designates a position of each block in a horizontal direction;
generating a vertical block address which designates a position of each block in a vertical direction;
generating said offset data;
adding said horizontal block address to said offset data; and
adding said vertical block address to said offset data.

Preferably, said horizontal block address generating step comprises the steps of:
receiving a horizontal block pulse having the same period of time as an interval of a block in a horizontal direction;
counting the number of said horizontal block pulses; and
generating said horizontal block address which designates the position of the block in the horizontal direction corresponding to said counted value.

Preferably, said vertical block address generating step comprises the steps of:
receiving a vertical block pulse having the same period of time as an interval of a block in a vertical direction;
counting the number of said vertical block pulses; and
generating said vertical block address which designates the position of the block in the vertical direction corresponding to said counted value.

Preferably, said offset data is less than a dimension of the horizontal or vertical directional interval with respect to a certain block.

According to another aspect of the present invention, there is provided a decoding method for decoding video data which is encoded after being partitioned into blocks each of which has a predetermined dimension, the method characterised by comprising the steps of:
receiving frames of video data encoded by an encoding method according to any of the preceding claims;
restoring the block data which has been variably partitioned and encoded;
generating a predetermined picture partitioning address for each said received frame, based on offset data which increases linearly and repetitively from frame to frame by said predetermined pixel dimension at said predetermined interval rate, each time a predetermined picture partitioning sync signal is supplied to the encoded input data; and
storing block data restored in said restoring step according to said picture partitioning address to reconstruct a predetermined frame.

According to a further aspect of the present invention, there is provided an encoding apparatus which is operative to partition video data into blocks of a predetermined dimension, encode the partitioned blocks, and perform a differential pulse code modulation (DPCM) in units of a block, considering correlation between a current frame and a preceding frame, the encoding apparatus being operative also to adopt a variable picture partitioning technique and characterised by comprising:
means for generating a predetermined picture partitioning address for each said current frame, based on offset data which increases linearly and repetitively from frame to frame by a predetermined pixel dimension at a predetermined interval rate;
means for generating a predetermined picture partitioning sync signal in order to match variable picture partitioning between encoding and decoding procedures;
means for partitioning each said current frame of the input video data into a plurality of blocks according to said picture partitioning address; and
means for storing block data restored for motion compensation according to the picture partitioning address to reconstruct a predetermined frame.

Preferably, said picture partitioning address generating means comprises a horizontal block counter for receiving horizontal block pulses each having the same period of time as an interval of a block in a horizontal direction, and counting said horizontal block pulses;
means for receiving the counted value of said horizontal block counter and generating a horizontal block address which designates a position of a block in a horizontal direction corresponding to the counted value;
a vertical block counter for receiving vertical block pulses each having the same period of time as an interval of a block in a vertical direction, and counting said vertical block pulses;
means for receiving the counted value of said vertical block counter and generating a vertical block address which designates a position of a block in a vertical direction corresponding to the counted value;
offset data generating means for receiving a frame-synchronised pulse and generating, for each said current frame, said offset data;
means for adding said horizontal block address to said offset data, and generating a horizontal partitioning address; and
predetermined sync signal so as to reset the offset data at a predetermined interval of time.

Preferably, said offset data is less than a dimension of a horizontal or vertical directional interval.

According to another aspect of the present invention, there is provided a decoding apparatus for decoding video data which is encoded after being partitioned into blocks each of which has a predetermined dimension, said decoding apparatus characterised by comprising means for receiving frames of video data encoded by an encoding apparatus which adopts a variable picture partitioning technique and is in accordance with any of the preceding aspects of the invention;
means for restoring the block data which has been variably partitioned and encoded into block video data of a spatial domain;
means for generating a predetermined picture partitioning address for each said received frame, based on offset data which increases linearly and repetitively from frame to frame by said predetermined pixel dimension at said predetermined interval rate, according to a predetermined picture partitioning sync signal supplied through said receiving means; and
means for storing block data restored in said restoring means according to said picture partitioning address to reconstruct a predetermined frame.

For a better understanding of the invention, and to show how the same may be carried into effect, reference will now be made, by way of example, to Figures 3 to 6 of the accompanying diagrammatic drawings, in which:
Figure 3 is a block diagram of one example of an encoding apparatus which adopts a variable picture partitioning technique according to an embodiment of the present invention;
Figure 4 is a detailed block diagram of a variable picture partitioning controller shown in Figure 3;
Figure 5 is a schematic diagram for explaining a variable picture partitioning process in an example of the present invention; and
Figure 6 is a block diagram of a decoding apparatus which adopts a variable picture partitioning technique according to another embodiment of the present invention.

In the figures, like reference numerals denote like or corresponding parts.

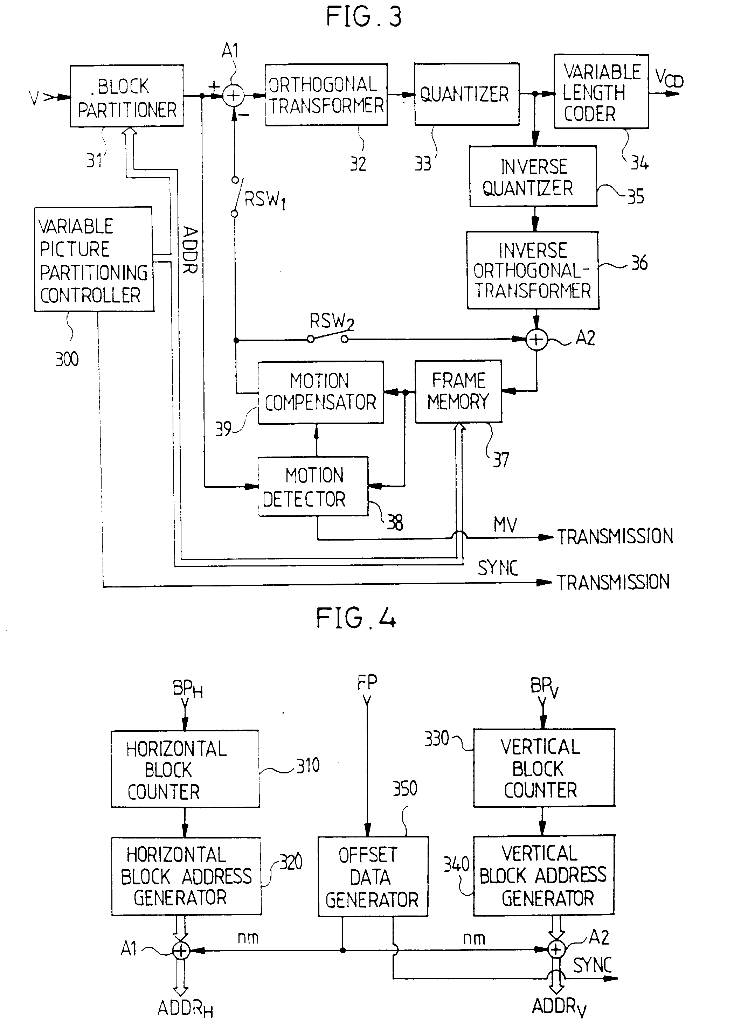

The apparatus of Figure 3 further comprises a variable picture partitioning controller 300 in addition to the elements shown in Figure 1. Variable partitioning controller 300 is connected to a block partitioner 31 and a frame memory 37, respectively to which a predetermined picture partitioning address ADDR is supplied. Also, variable picture partitioning controller 300 generates a predetermined picture partitioning sync signal SYNC for use in reproduction of data in a decoding procedure. Block partitioner 31 partitions a picture into blocks each of which has a predetermined dimension, in which positions of the blocks vary by a predetermined displacement for every frame according to picture partitioning address ADDR supplied from variable picture partitioning controller 300; Also, address signal ADDR output from variable picture partitioning controller 300 is supplied to frame memory 37 so that the block data output from second adder A2 is stored in frame memory 37, thereby reconstructing the frame partitioned in block converter 31.

If every frame is encoded by the variable picture partitioning technique, the same picture partitioning having the same displacement should be performed for every frame in a decoding apparatus. Accordingly, variable picture partitioning controller 300 generates a predetermined picture partitioning sync signal SYNC in order to meet synchronization of the picture partitioning between the encoding and decoding procedures. Picture partitioning sync signal SYNC generated in a constant interval of time from variable picture partitioning controller 300 is supplied toward a decoding apparatus. Another variable picture partitioning controller utilizes the received picture partitioning sync signal SYNC as a reference signal, to accordingly generate a predetermined picture partitioning address.

Figure 4 is a detailed block diagram of variable picture partitioning controller 300 shown in the Figure 3 apparatus.

As shown in Figure 4, variable picture partitioning controller 300 comprises a horizontal block counter 310 for receiving a horizontal block pulse BPH and counting the number of blocks in a horizontal direction, a horizontal block address generator 320 for generating a horizontal block address corresponding to a position of the block in the horizontal direction according to the counted value of horizontal block counter 310, a vertical block counter 330 for receiving a vertical block pulse BPV and counting the number of blocks in a vertical direction. a vertical block address generator 340 for generating a vertical block address corresponding to a position of the block in the vertical direction according to the counted value of vertical block counter 330, an offset data generator 350 for generating predetermined dimension offset data nm each time a frame pulse FP is applied thereto, in which offset data generator 350 is reset when the offset value reaches a predetermined magnitude, and picture partitioning sync signal SYNC is generated when reset, a first adder A1 for adding the horizontal block address data supplied from horizontal block address generator 320 to offset data nm supplied from offset data generator 350 to output a horizontal partitioning address ADDRH, and a second adder A2 for adding vertical block address data supplied from vertical block address generator 340 to offset data nm supplied from offset data generator 350 to output a horizontal partitioning address ADDRV.

In Figure 4, horizontal block counter 310 receives from an external source (not shown) horizontal block pulse BPH having a period of time which is coincident with an interval of each block in a horizontal direction, and counts the number of the input horizontal block pulses BPH. The counted value of horizontal block counter 310 is supplied to horizontal block address generator 320. Horizontal block address generator 320 calculates and generates a horizontal block address corresponding to a position of each block in a horizontal direction from the frame to be partitioned into a plurality of blocks, using the counted value of horizontal block counter 310.

On the other hand. vertical block counter 330 receives a vertical block pulse BPV from the external source (not shown) having a period of time which matches an interval of each block in a vertical direction, so as to count the number of the input vertical block pulses BPV. The counted value of vertical block counter 330 is supplied to a vertical block address generator 340. The vertical block address generator 340 calculates and generates a vertical block address corresponding to a position of each block in a vertical direction from the frame to be partitioned into a plurality of blocks, using the blocks counted value of vertical block counter 330. To variably partition the blocks for each frame, the thus-obtained horizontal and vertical block addresses should be varied by a predetermined pixel for each frame.

The offset data generator 350 is provided as an element for varying the horizontal and vertical block address of each block for each frame. Offset generator 350 receives a frame pulse FP from the external source which is generated for each frame. Also, offset data generator 350 generates offset data nm which increases by m pixels each time frame pulse FP is input therein. Here, when the number of pixels of the block is NxN, a value of m is one among the values of 1 to N-1, in which the value is generally taken as a very small one. When the value of m is 1, an effective and easily embodied method is provided. The maximum value of offset data run is smaller than N, and n is an integer coefficient for increasing the offset data by m for each frame. Thus, in this case, offset data generator 350 uses an up-counter of modulus of N. Offset data nm output from offset data generator 350 is supplied to first adder A1 and second adder A2, respectively. Then, first adder A1 adds the horizontal block address output from horizontal block address generator 320 to offset data nm, and outputs a horizontal partitioning address ADDRN which is altered by offset data nm in a horizontal direction. Also, second adder A2 adds the vertical block address output from vertical block address generator 340 to offset data nm, and outputs a vertical partitioning address ADDRV which is altered by offset data nm in a vertical direction. The above horizontal and vertical partitioning addresses ADDRH and ADDRV become a single picture partitioning address ADDR so as to be supplied to block partitioner 31 and frame memory 37, respectively. Then, block partitioner 31 performs block partitioning while the position of the block is varied by an offset of m for each frame in horizontal and vertical directions according to picture partitioning address ADDR.

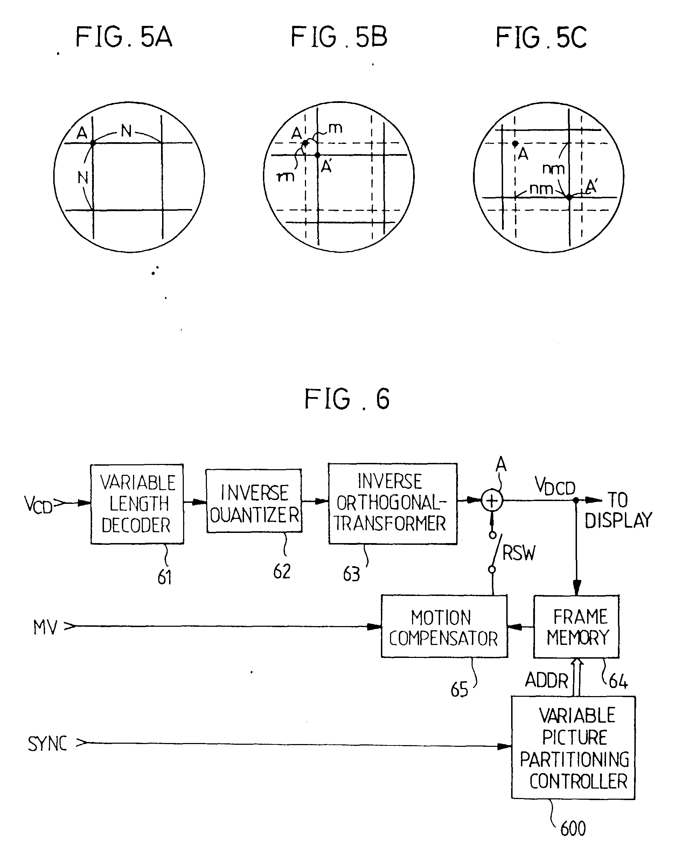

The above variable picture partitioning process is shown in Figures 5A to 5C. Figure 5A shows a partitioning state before picture partitioning is variably performed, that is, a state where offset data nm is not added to the horizontal and vertical block addresses. Figure 5B shows a picture partitioned by a picture partitioning address ADDR in which a frame pulse FP is input to offset data generator 350, to accordingly generate offset data m, and the generated offset data m is added to the horizontal and vertical block addresses, thereby obtaining the picture partitioning address ADDR. As shown in Figure 5B, current frame block A' is obtained by shifting the preceding frame block A by a value of m, to horizontal and vertical directions, respectively. Such a variable picture partitioning process repeated by a multiplicity of n is shown in Figure 5C. That is, offset data generator 350 receives n times frame pulse FP, to accordingly generate offset data nm and add the generated offset data nm to the horizontal and vertical block addresses. Accordingly, as shown in Figure 5C, current frame block A' is obtained by shifting initial frame block A by a value of nm, to horizontal and vertical directions, respectively. Offset data generator 350 is an up-counter of modulus of N. Thus, when the offset data nm reaches a .value of N, the up-counter starts again counting from a value of zero. Also, offset data generator 350 generates picture partitioning sync signal SYNC each time frame pulse FP is input to thereby reset offset data nm. The picture partitioning sync signal SYNC is transmitted toward a decoding portion, to accordingly synchronize the picture partitioning of the encoding and decoding portions.

Figure 6 is a block diagram of one example of a decoding apparatus which adopts variable picture partitioning technique according to an embodiment of the present invention. The Figure 6 apparatus further comprises a variable picture partitioning controller 600 in addition to the Figure 2 apparatus. Variable picture partitioning controller 600 receives a sync signal SYNC transmitted from the encoding portion and generates picture partitioning address signal ADDR for frame memory 64. Thus, the block data reproduced in the decoding portion is stored in frame memory 64 according to the variable picture partitioning technique. Variable picture partitioning controller 600 of the decoding apparatus has the same structural elements as variable picture partitioning controller 300 of the encoding apparatus shown in Figure 4. However. offset data generator 350 in variable picture partitioning controller 300 outputs sync signal SYNC, while the offset data generator in variable picture partitioning controller 600 receives the sync signal. That is, offset data generator 350 of the encoding apparatus generates picture partitioning sync signal SYNC in a predetermined interval, while the offset data generator of the decoding apparatus receives the transmitted picture partitioning sync signal SYNC, to accordingly reset offset data nm to a value of zero. Then, in the same manner as that of the encoding apparatus, offset data nm is added to the horizontal and vertical addresses, respectively to obtain horizontal partitioning address ADDRH and vertical partitioning address ADDRV. Such picture partitioning addresses ADDR are supplied to frame memory 64. Then, the restored block data output from adder A is stored in frame memory 64 according to picture partitioning addresses ADDR. Thus, the frame reproduced in the decoding apparatus is reconstructed so as to match the frame which has been variably partitioned in the encoding apparatus.

As described above, in partitioning a picture into a plurality of blocks and encoding and decoding the partitioned blocks, an encoding and decoding system which adopts the variable picture partitioning technique according to preferred embodiments of the present invention, performs the encoding and decoding while the positions of the blocks into which are partitioned for every picture are minutely altered, thereby reducing the blocking artifact which occurs at the boundary portions of the blocks.

Particular embodiments of the present invention have been described above. However, a variety of modifications and applications will be apparent to a person skilled in the art.

The reader's attention is directed to all papers and documents which are filed concurrently with or previous to this specification in connection with this application and which are open to public inspection with this specification.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

## Claims

1. An encoding method which partitions video data into blocks of a predetermined dimension (31), encodes the partitioned blocks, and performs a differential pulse code modulation (DPCM) in units of a block, considering correlation between a current frame and a preceding frame, characterised in that said method adopts a variable picture partitioning technique (300) which maintains correlation between current frames and respective preceding frames of input video data, said variable picture partitioning technique comprising the steps of:
generating (320, 340) a predetermined picture partitioning address (ADDR) for each said current frame, based on offset data (nm) which increases linearly and repetitively from frame to frame by a predetermined pixel dimension at a predetermined interval rate;
generating (300) a predetermined picture partitioning sync signal (SYNC) in order to match variable picture partitioning between encoding and decoding apparatuses;
partitioning (31) each said current frame of the input video data into a plurality of blocks according to said picture partitioning address; and
storing (37) block data restored for motion compensation (39) according to the picture partitioning address to reconstruct a predetermined frame.

2. An encoding method according to claim 1, wherein said picture partitioning sync signal (SYNC) is generated each time said offset data is reset by new data.

3. An encoding method according to claim 1 or 2, wherein said picture partitioning address generating step (320, 340) comprises the steps of for each said current frame;
generating a horizontal block address (320) which designates a position of each block in a horizontal direction;
generating a vertical block address (340) which designates a position of each block in a vertical direction;
generating (350) said offset data (nm);
adding (A1) said horizontal block address to said offset data; and
adding (A2) said vertical block address to said offset data.

4. An encoding method according to claim 3, wherein said horizontal block address generating step comprises the steps of:
receiving a horizontal block pulse (BPH) having the same period of time as an interval of a block in a horizontal direction;
counting (310) the number of said horizontal block pulses; and
generating (320) said horizontal block address which designates the position of the block in the horizontal direction corresponding to said counted value.

5. An encoding method according to claim 3 or 4, wherein said vertical block address generating step comprises the steps of:
receiving a vertical block pulse (BPV) having the same period of time as an interval of a block in a vertical direction;
counting (330) the number of said vertical block pulses; and
generating (340) said vertical block address which designates the position of the block in the vertical direction corresponding to said counted value.

6. An encoding method according to claim 3, 4 or 5, wherein said offset data is less than a dimension of the horizontal or vertical directional interval with respect to a certain block.

7. A decoding method for decoding video data which is encoded after being partitioned into blocks each of which has a predetermined dimension, the method characterised by comprising the steps of:
receiving (61) frames of video data encoded by an encoding method according to any of the preceding claims;
restoring (62, 63) the block data which has been variably partitioned and encoded;
generating (600) a predetermined picture partitioning address (ADDR) for each said received frame, based on offset data which increases linearly and repetitively from frame to frame by said predetermined pixel dimension at said predetermined interval rate, each time a predetermined picture partitioning sync signal (SYNC) is supplied to the encoded input data; and
storing (64) block data restored in said restoring step according to said picture partitioning address to reconstruct a predetermined frame.

8. An encoding apparatus which is operative to partition video data into blocks of a predetermined dimension (31), encode the partitioned blocks, and perform a differential pulse code modulation (DPCM) in units of a block, considering correlation between a current frame and a preceding frame, the encoding apparatus being operative also to adopt a variable picture partitioning technique (300) and characterised by comprising:
means (320, 340) for generating a predetermined picture partitioning address (ADDR) for each said current frame, based on offset data (nm) which increases linearly and repetitively from frame to frame by a predetermined pixel dimension at a predetermined interval rate;
means (300) for generating a predetermined picture partitioning sync signal (SYNC) in order to match variable picture partitioning between encoding and decoding procedures;
means (31) for partitioning each said current frame of the input video data into a plurality of blocks according to said picture partitioning address; and
means (37) for storing block data restored for motion compensation (39) according to the picture partitioning address to reconstruct a predetermined frame.

9. An encoding apparatus according to claim 8, wherein said picture partitioning address generating means (320, 340) comprises:
a horizontal block counter (310) for receiving horizontal block pulses (BPH), each having the same period of time as an interval of a block in a horizontal direction, and counting said horizontal block pulses;
means (320) for receiving the counted value of said horizontal block counter and generating a horizontal block address which designates a position of a block in a horizontal direction corresponding to the counted value;
a vertical block counter (330) for receiving vertical block pulses (BPV), each having the same period of time as an interval of a block in a vertical direction, and counting said vertical block pulses;
means (340) for receiving the counted value of said vertical block counter and generating a vertical block address which designates a position of a block in a vertical direction corresponding to the counted value;
offset data generating means (350) for receiving a frame-synchronised pulse (FP) and generating, for each said current frame, said offset data (nm);
means (Al) for adding said horizontal block address to said offset data, and generating a horizontal partitioning address (ADDRH); and
means (A2) for adding said vertical block data to said offset data, and generating a vertical partitioning address (ADDRV).

10. An encoding apparatus according to claim 8 or 9, wherein said picture partitioning sync signal generating-means is a means which is coupled to said offset data generating means (350) and generates a predetermined sync signal so as to reset the offset data at a predetermined interval of time.

11. An encoding apparatus according to claim 8, 9 or 10, wherein said offset data is less than a dimension of a horizontal or vertical directional interval.

12. A decoding apparatus for decoding video data which is encoded after being partitioned into blocks each of which has a predetermined dimension, said decoding apparatus characterised by comprising:
means (61) for receiving frames of video data encoded by an encoding apparatus which adopts a variable picture partitioning technique and is in accordance with claim 8, 9, 10 or 11;
means (62, 63) for restoring the block data which has been variably partitioned and encoded into block video data of a spatial domain;
means (600) for generating a predetermined picture partitioning address (ADDR) for each said received frame, based on offset data which increases linearly and repetitively from frame to frame by said predetermined pixel dimension at said predetermined interval rate, according to a predetermined picture partitioning sync signal (SYNC) supplied through said receiving means; and
means (64) for storing block data restored in said restoring means according to said picture partitioning address to reconstruct a predetermined frame.

## Patentansprüche

1. Kodierverfahren, mit dem Videodaten in Blöcke einer vorgegebenen Größe (31) unterteilt werden, die unterteilten Blöcke kodiert werden, und eine Differenz-Pulskodemodulation (DPCM) in Einheiten eines Blocks ausgeführt wird, wobei die Beziehung zwischen einem momentanen Rahmen und einem vorhergehenden Rahmen berücksichtigt wird, **dadurch gekennzeichnet**, daß bei dem Verfahren eine veränderliche Bildunterteilungstechnik (300) übernommen wird, mit der die Beziehung zwischen momentanen Rahmen und entsprechenden vorhergehenden Rahmen von Eingangsvideodaten aufrechterhalten wird, wobei die veränderliche Bildunterteilungstechnik die folgenden Schritte umfaßt:
Erzeugen (320,340) einer vorgegebenen Bildunterteilungsadresse (ADDR) für jeden momentanen Rahmen auf der Grundlage von Verschiebungsdaten (nm), die mit einer vorgegebenen Intervallrate linear und wiederholt von Rahmen zu Rahmen um eine vorgegebene Pixelgröße zunehmen;
Erzeugen (300) eines vorgegebenen Bildunterteilungs-Synchronisationssignals (SYNC), um veränderliche Bildunterteilung zwischen Kodier- und Dekodiervorrichtungen anzupassen;
Unterteilen (31) jedes momentanen Rahmens der Eingangsvideodaten in eine Vielzahl von Blöcken entsprechend der Bildunterteilungsadresse; und
Speichern (37) von Blockdaten, die für die Bewegungskompensation (39) rückgespeichert wurden, entsprechend der Bildunterteilungsadresse, um einen vorgegebenen Rahmen wiederherzustellen.

2. Kodierverfahren nach Anspruch 1, wobei das Bildunterteilungs-SynchronisationsSignal (SYNC) jedesmal dann erzeugt wird, wenn die Verschiebungsdaten durch neue Daten zurückgesetzt werden.

3. Kodierverfahren nach Anspruch 1 oder 2, wobei der Schritt des Erzeugens der Bildunterteilungsadresse (320,340) die folgenden Schritte für jeden momentanen Rahmen umfaßt:
Erzeugen einer horizontalen Blockadresse (320), die eine Position jedes Blocks in einer horizontalen Richtung angibt;
Erzeugen einer vertikalen Blockadresse (340), die eine Position jedes Blocks in einer vertikalen Richtung angibt;
Erzeugen (350) der Verschiebungsdaten (nm);
Addieren (A1) der horizontalen Blockadresse zu den Verschiebungsdaten; und
Addieren (A2) der vertikalen Blockadresse zu den Verschiebungsdaten.

4. Kodierverfahren nach Anspruch 3, wobei der Schritt des Erzeugens der horizontalen Blockadresse die folgenden Schritte umfaßt:
Empfangen eines horizontalen Blockimpulses (BPH) mit der gleichen Zeitdauer wie ein Intervall eines Blocks in einer horizontalen Richtung;
Zählen (310) der Anzahl der horizontalen Blockimpulse; und
Erzeugen (320) der horizontalen Blockadresse, die die Position des Blocks in der horizontalen Richtung angibt, entsprechend dem Zählwert.

5. Kodierverfahren nach Anspruch 3 oder 4, wobei der Schritt des Erzeugens der vertikalen Blockadresse die folgenden Schritte umfaßt:
Empfangen eines vertikalen Blockimpulses (BPV) mit der gleichen Zeitdauer wie ein Intervall eines Blocks in einer vertikalen Richtung;
Zählen (330) der Anzahl der vertikalen Impulse; und
Erzeugen (340) der vertikalen Blockadresse, die die Position des Blocks in der vertikalen Richtung bezeichnet, entsprechend dem Zählwert.

6. Kodierverfahren nach Anspruch 3 oder 5, wobei die Verschiebungsdaten kleiner sind als eine Größe des Intervalls in horizontaler oder vertikaler Richtung in bezug auf einen bestimmten Block.

7. Dekodierverfahren zum Dekodieren von Videodaten, die kodiert werden, nachdem sie in Blöcke unterteilt wurden, von denen jeder eine vorgegebene Größe hat, wobei das Verfahren **dadurch gekennzeichnet** ist, daß es die folgenden Schritte umfaßt:
Empfangen (71) von Rahmen von Videodaten, die mit einem Kodierverfahren nach einem der vorangehenden Ansprüche kodiert wurden;
Rückspeichern (62,63) der Blockdaten, die veränderlich untergeteilt und kodiert wurden;
Erzeugen (600) einer vorgegebenen Bildunterteilungsadresse (ADDR) für jeden der empfangenen Rahmen auf der Grundlage von Verschiebungsdaten, die mit einer vorgegebenen Intervallrate linear und wiederholt von Rahmen zu Rahmen um eine vorgegebene Pixelgröße zunehmen, immer dann, wenn den kodierten Eingangsdaten ein vorgegebenes Bildunterteilungs-Synchronisationssignal (SYNC) zugeführt wird; und
Speichern (64) von Blockdaten, die in dem Rückspeicherschritt zurückgespeichert wurden, entsprechend der Bildunterteilungsadresse, um einen vorgegebenen Rahmen wiederherzustellen.

8. Kodiervorrichtung, die Videodaten in Blöcke einer vorgegebenen Größe (31) unterteilt, die unterteilten Blöcke kodiert und eine Differenz-Pulskodemodulation (DPCM) in Einheiten eines Blocks ausführt, wobei die Beziehung zwischen einem momentanen Rahmen und einem vorhergehenden Rahmen berücksichtigt wird, wobei die Kodiervorrichtung des weiteren eine veränderliche Bildunterteilungstechnik (300) übernimmt und **dadurch gekennzeichnet** ist, daß sie umfaßt:
Einrichtungen (320,340) zum Erzeugen einer vorgegebenen Bildunterteilungsadresse (ADDR) für jeden momentanen Rahmen auf der Grundlage von Verschiebungsdaten (nm), die mit einer vorgegebenen Intervallrate linear und wiederholt von Rahmen zu Rahmen um eine vorgegebene Pixelgröße zunehmen;
eine Einrichtung (300) zum Erzeugen eines vorgegebenen Bildunterteilungs-Synchronisationssignals (SYNC), um veränderliche Bildaufteilung zwischen Kodier- und Dekodiervorgängen anzupassen;
eine Einrichtung (31) zum Unterteilen jedes momentanen Rahmens der Eingangsvideodaten in eine Vielzahl von Blöcken entsprechend der Bildunterteilungsadresse; und
eine Einrichtung (37) zum Speichern von Blockdaten, die für Bewegungskompensation (39) rückgespeichert wurden, entsprechend der Bildunterteilungsadresse, um einen vorgegebenen Rahmen wiederherzustellen.

9. Kodiervorrichtung nach Anspruch 8, wobei die Bildunterteilungsadressen-Erzeugungseinrichtung (320,340) umfaßt:
einen horizontalen Blockzähler (310) zum Empfangen horizontaler Blockimpulse (BPH), die jeweils die gleiche Zeitdauer wie ein Intervall eines Blocks in einer horizontalen Richtung aufweisen, und zum Zählen der horizontalen Blockimpulse;
eine Einrichtung (320) zum Empfangen des Zählwertes des horizontalen Blockzählers und zum Erzeugen einer horizontalen Blockadresse, die eine Position eines Blocks in einer horizontalen Richtung entsprechend dem Zählwert angibt;
einen vertikalen Blockzähler (330), der vertikale Blockimpulse (BPV) empfängt, die jeweils die gleiche Zeitdauer wie ein Intervall eines Blocks in einer vertikalen Richtung aufweisen, und zum Zählen der vertikalen Blockimpulse;
eine Einrichtung (340) zum Empfangen des Zählwertes des vertikalen Blockzählers und zum Erzeugen einer vertikalen Blockadresse, die eine Position eines Blocks in einer vertikalen Richtung entsprechend dem Zählwert angibt;
eine Verschiebungsdatenerzeugungseinrichtung (350) zum Empfangen eines rahmensynchronisierten Impulses (FP) und zum Erzeugen der Verschiebungsdaten (nm) für jeden momentanen Rahmen;
eine Einrichtung (A1) zum Addieren der horizontalen Blockadresse zu den Verschiebungsdaten und zum Erzeugen einer horizontalen Unterteilungsadresse (ADDRH); und
eine Einrichtung (A2) zum Addieren der vertikalen Blockdaten zu den Verschiebungsdaten und zum Erzeugen einer vertikalen Unterteilungsadresse (ADDRV).

10. Kodiervorrichtung nach Anspruch 8 oder 9, wobei die Einrichtung zum Erzeugen des Bildunterteilungs-Synchronisationssignals eine Einrichtung ist, die mit der Verschiebungsdaten-Erzeugungseinrichtung (350) verbunden ist und ein vorgegebenenes Synchronisationssignal erzeugt, um die Verschiebungsdaten mit einer vorgegebenen Zeitdauer zurückzusetzen.

11. Kodiervorrichtung nach Anspruch 8, 9 oder 10, wobei die Verschiebungsdaten kleiner sind als eine Größe eines Intervalls in horizontaler oder vertikaler Richtung.

12. Dekodiervorrichtung zum Dekodieren von Videodaten, die kodiert werden, nachdem sie in Blöcke unterteilt wurden, von denen jeder eine vorgegebene Größe hat, wobei die Dekodiervorrichtung **dadurch gekennzeichnet** ist, daß sie umfaßt:
eine Einrichtung (61) zum Empfangen von Rahmen von Videodaten, die mit einer Kodiervorrichtung kodiert wurden, bei der eine veränderliche Bildunterteilungstechnik eingesetzt wird, und die Anspruch 8, 9, 10 oder 11 entspricht;
Einrichtungen (62,63) zum Rückspeichern der Blockdaten, die veränderlich unterteilt und in Blockvideodaten einer räumlichen Domäne kodiert wurden;
eine Einrichtung (600) zum Erzeugen einer vorgegebenen Bildunterteilungsadresse (ADDR) für jeden empfangenen Rahmen auf der Grundlage von Verschiebungsdaten, die mit der vorgegebenen Intervallrate linear und wiederholt von Rahmen zu Rahmen um die vorgegebene Pixelgröße zunehmen, entsprechend einem vorgegebenen Bildaufteilungs-Synchronisationssignal (SYNC), das über die Empfangseinrichtung zugeführt wird; und
eine Einrichtung (64) zum Speichern von Blockdaten, die in der Rückspeichereinrichtung rückgespeichert wurden, entsprechend der Bildunterteilungsadresse, um einen vorgegebenen Rahmen wiederherzustellen.

## Revendications

1. Procédé de codage, qui découpe des données vidéo en des blocs d'une dimension prédéterminée (31), code les blocs découpés et effectue une modulation différentielle par impulsions codées (DPCM) dans les unités d'un bloc, en prenant en compte la corrélation entre une trame actuelle et une trame précédente, caractérisé en ce que ledit procédé adopte une technique de découpage variable d'image (300) qui maintient une corrélation entre trames actuelles et trames précédentes respectives des données vidéo d'entrée, ladite technique de découpage variable d'image comprenant les étapes de :
génération (320, 340) d'une adresse prédéterminée de découpage d'image (ADDR) pour chacune desdites trames actuelles, sur la base de données de décalage (nm) qui augmentent de manière linéaire et récurrente d'une trame à la suivante, d'une dimension de pixel prédéterminée à un intervalle prédéterminé ;
génération (300) d'un signal prédéterminé de synchronisation de découpage d'image (SYNC) afin de correspondre au découpage d'image variable entre appareils de codage et de décodage ;
découpage (31) de chacune desdites trames actuelles des données vidéo d'entrée en plusieurs blocs en fonction de ladite adresse de découpage d'image ; et
stockage (37) des données des blocs rétablies pour une compensation de mouvement (39) en fonction de l'adresse de découpage d'image afin de reconstituer une trame prédéterminée.

2. Procédé de codage selon la revendication 1, dans lequel ledit signal de synchronisation de découpage d'image (SYNC) est émis chaque fois que lesdites données de décalage sont remises à l'état initial par de nouvelles données.

3. Procédé de codage selon la revendication 1 ou 2, dans lequel ladite étape de génération d'adresse de découpage d'image (320, 340) comprend, pour chacune desdites trames actuelles, les étapes de :
génération d'une adresse horizontale de bloc (320) qui désigne une position de chaque bloc dans le sens horizontal;
génération d'une adresse verticale de bloc (340) qui désigne une position de chaque bloc dans le sens vertical ;
génération (350) desdites données de décalage (nm) ;
ajout (A1) de ladite adresse horizontale de bloc auxdites données de décalage ; et
ajout (A2) de ladite adresse verticale de bloc auxdites données de décalage.

4. Procédé de codage selon la revendication 3, dans lequel ladite étape de génération d'adresse horizontale de bloc comprend les étapes de :
réception d'une impulsion horizontale de bloc (BPH) ayant la même période de temps qu'un intervalle d'un bloc dans le sens horizontal ;
comptage (310) du nombre desdites impulsions horizontales de bloc ; et
génération (320) de ladite adresse horizontale de bloc qui désigne la position du bloc dans le sens horizontal correspondant à ladite valeur comptée.

5. Procédé de codage selon la revendication 3 ou 4, dans lequel ladite étape de génération d'adresse verticale de bloc comprend les étapes de :
réception d'une impulsion verticale de bloc (BPV) ayant la même période de temps qu'un intervalle d'un bloc dans le sens vertical ;
comptage (330) du nombre desdites impulsions verticales de bloc ; et
génération (340) de ladite adresse verticale de bloc qui désigne la position du bloc dans le sens vertical correspondant à ladite valeur comptée.

6. Procédé de codage selon la revendication 3, 4 ou 5, dans lequel lesdites données de décalage sont inférieures à une dimension de l'intervalle dans le sens horizontal ou dans le sens vertical par rapport à un certain bloc.

7. Procédé de décodage servant au décodage de données vidéo, qui ont été codées après avoir été découpées en blocs ayant chacun une dimension prédéterminée, le procédé étant caractérisé en ce qu'il comprend les étapes de :
réception (61) de trames de données vidéo, codées par un procédé de codage selon l'une quelconque des revendications précédentes ;
rétablissement (62, 63) des données des blocs, qui ont été découpées et codées de façon variable ;
génération (600) d'une adresse prédéterminée de découpage d'image (ADDR) pour chacune desdites trames reçues, sur la base de données de décalage qui augmentent de manière linéaire et récurrente d'une trame à la suivante, de ladite dimension de pixel prédéterminée audit intervalle prédéterminé, chaque fois qu'un signal prédéterminé de synchronisation de découpage d'image (SYNC) est appliqué aux données d'entrée codées ; et
stockage (64) des données des blocs rétablies dans ladite étape de rétablissement en fonction de ladite adresse de découpage d'image afin de reconstituer une trame prédéterminée.

8. Appareil de codage, servant à découper des données vidéo en des blocs d'une dimension prédéterminée (31), à coder les blocs découpés et à effectuer une modulation différentielle par impulsions codées (DPCM) dans les unités d'un bloc, en prenant en compte la corrélation entre une trame actuelle et une trame précédente, l'appareil de codage étant également propre à adopter une technique de découpage variable d'image (300) et étant caractérisé en ce qu'il comprend :
des moyens (320, 340) pour la génération d'une adresse prédéterminée de découpage d'image (ADDR) pour chacune desdites trames actuelles, sur la base de données de décalage (nm) qui augmentent de manière linéaire et récurrente d'une trame à la suivante, d'une dimension de pixel prédéterminée à un intervalle prédéterminé ;
un moyen (300) pour la génération d'un signal prédéterminé de synchronisation de découpage d'image (SYNC) afin de correspondre au découpage d'image variable entre modes opératoires de codage et de décodage ;
un moyen (31) pour le découpage de chacune desdites trames actuelles des données vidéo d'entrée en plusieurs blocs en fonction de ladite adresse de découpage d'image ; et
un moyen (37) pour le stockage des données des blocs rétablies pour une compensation de mouvement (39) en fonction de l'adresse de découpage d'image afin de reconstituer une trame prédéterminée.

9. Appareil de codage selon la revendication 8, dans lequel lesdits moyens de génération d'adresse de découpage d'image (320, 340) comprennent :
un compteur de blocs horizontaux (310), qui reçoit les impulsions horizontales de bloc (BPH) ayant chacune la même période de temps qu'un intervalle d'un bloc dans le sens horizontal, et qui compte lesdites impulsions horizontales de bloc ;
un moyen (320) destiné à recevoir la valeur comptée par ledit compteur de blocs horizontaux, et à produire une adresse horizontale de bloc qui désigne une position d'un bloc dans le sens horizontal correspondant à la valeur comptée ;
un compteur de blocs verticaux (330), qui reçoit les impulsions verticales de bloc (BPV) ayant chacune la même période de temps qu'un intervalle d'un bloc dans le sens vertical, et qui compte lesdites impulsions verticales de bloc ;
un moyen (340) destiné à recevoir la valeur comptée par ledit compteur de blocs verticaux, et à produire une adresse verticale de bloc qui désigne une position d'un bloc dans le sens vertical correspondant à la valeur comptée ;
un moyen générateur de données de décalage (350) qui reçoit une impulsion synchronisée sur la trame (FP) et qui produit, pour chacune desdites trames actuelles, lesdites données de décalage (nm) ;
un moyen (A1) permettant d'ajouter ladite adresse horizontale de bloc auxdites données de décalage, et de produire une adresse de découpage horizontale (ADDRH) ; et
un moyen (A2) permettant d'ajouter ladite adresse verticale de bloc auxdites données de décalage, et de produire une adresse de découpage verticale (ADDRV).

10. Appareil de codage selon la revendication 8 ou 9, dans lequel ledit moyen générateur de signaux de synchronisation de découpage d'image est un moyen qui est relié audit moyen générateur de données de décalage (350) et qui produit un signal prédéterminé de synchronisation de manière à remettre les données de décalage à l'état initial, à un intervalle de temps prédéterminé.

11. Appareil de codage selon la revendication 8, 9 ou 10, dans lequel lesdites données de décalage sont inférieures à une dimension d'un intervalle dans le sens horizontal ou dans le sens vertical.

12. Appareil de décodage servant au décodage de données vidéo, qui ont été codées après avoir été découpées en blocs ayant chacun une dimension prédéterminée, ledit appareil de décodage étant caractérisé en ce qu'il comprend :
un moyen (61) pour la réception de trames de données vidéo, codées par un appareil de codage, qui adopte une technique de découpage variable d'image et qui correspond à la revendication 8, 9, 10 ou 11 ;
des moyens (62, 63) pour le rétablissement des données des blocs, qui ont été découpées et codées de façon variable en des blocs de données vidéo d'un domaine spatial ;
un moyen (600) servant à la génération d'une adresse prédéterminée de découpage d'image (ADDR) pour chacune desdites trames reçues, sur la base de données de décalage qui augmentent de manière linéaire et récurrente d'une trame à la suivante, de ladite dimension de pixel prédéterminée audit intervalle prédéterminé, en fonction d'un signal prédéterminé de synchronisation de découpage d'image (SYNC), fourni par l'intermédiaire dudit moyen de réception ; et
un moyen (64) servant au stockage des données des blocs rétablies dans ledit moyen de rétablissement en fonction de ladite adresse de découpage d'image afin de reconstituer une trame prédéterminée.
